# EUROPÄISCHE PATENTSCHRIFT

(11) **EP 0 916 615 B1**
(45) Veröffentlichungstag und Bekanntmachung des Hinweises auf die Patenterteilung: **12.10.2005**
(21) Anmeldenummer: 98119982.1
(22) Anmeldetag: 22.10.1998
(51) Int. Cl.: B66F 9/18, B66F 9/10, B66F 9/06, B66F 9/075

(54) **Fahrerloses, z.B. frei navigierendes Transportfahrzeug zum Handhaben von Lasten**
Driverless , e.g. free navigating transport vehicle for handling loads
Véhicule sans conducteur, p. ex. véhicule de transport à navigation libre pour manipuler des charges

(30) Priorität: 12.11.1997 DE 19749900
(43) Veröffentlichungstag der Anmeldung: 19.05.1999
(73) Patentinhaber: SIEMAG TRANSPLAN GMBH, 57250 Netphen (DE)
(72) Erfinder: Simmich, Klaus, 57250 Netphen (DE); Fohr, Eckhard, 57555 Mudersbach (DE); Thorn, Horst, Dr., 57223 Kreuztal (DE); Schneider, Volker, 57072 Siegen (DE)
(74) Vertreter: Valentin, Ekkehard

(56) Entgegenhaltungen:
- EP-A- 0 458 722
- DE-A- 4 305 666
- DE-B- 1 226 940
- GB-A- 1 084 734

## Beschreibung

Die Erfindung betrifft ein fahrerloses, frei navigierendes Transportfahrzeug zum Handhaben von Lasten, insbesondere zum Transport von Bunden, wie zu Coils gewickelten metallischen Bändern, schweren Papierrollen oder dergleichen, mit einem heb- und senkbaren Lastaufnahmemittel. Durch die DE-A 1226940 ist es bekanntgeworden, daß das Lastaufnahmemittel auf einem im Fahrzeugchassis horizontal verfahrbaren, in seiner Endposition von Hydraulikstützen abgestütztem Traggerüst angeordnet ist und beim Aufnehmen oder Ablegen der Last von dem Traggerüst in eine über das Fahrzeugchassis hinaus vorkragende Position verfahrbar ist.

Derartige Transportfahrzeuge erfüllen die verschiedensten logistischen Anforderungen in Waren- und Materiallagern und sind in der Stahlindustrie zum Transport von Coils mit Gewichten von 30 bis ca. 60 Tonnen als automatisch arbeitende Einheiten mit unterschiedlichen Navigationssystemen im Einsatz. Mit Hilfe beispielsweise einer lasergestützten Navigation bewegt sich das Fahrzeug unabhängig von Bodenmarken oder fest definierten Routen auf einer virtuellen Fahrstrekke, die frei wählbar auf einem Fahrzeugleitrechner generiert wird. Änderungen des Kursverlaufes sind leicht zu verwirklichen, und zur Orientierung nutzt die Lasemavigation Reflektoren, die entlang des Fahrkurses angeordnet sind.

In der Praxis bekannte fahrerlose Transportfahrzeuge zum selbständigen Handhaben eines Coils, das ohne die Unterstützung eines Hallenkranes oder anderer Transfereinrichtungen von einer Übergabestation aufgenommen werden muß, besitzen einen Tragdorn, der zum Übernehmen der Last in das Coilauge eingefahren wird. Eine notwendige Voraussetzung ist hierbei, daß die Coilablage relativ frei stehen muß, damit das Transportfahrzeug die Ablage überfahren, d. h. zwischen die Hinterräder nehmen kann, ohne angrenzende Gewerke zu stören. Die Störkanten sind hierbei durch die Fahrzeugdimensionen gegeben. In vielen Fällen stehen die erforderlichen Bewegungsräume allerdings nicht zur Verfügung oder die Last muß sogar unmittelbar vom Boden aufgenommen werden bzw. der Lastaufnahmepunkt kann vom Fahrzeug nicht überfahren werden, z. B. bei der Aufnahme von einem Kettenförderer. Beim Aufnehmen durch Überfahren der Last ist darüber hinaus eine maximale Bodenbelastung einzuhalten, die z. B. im Stahlwerksbereich 10 t/m² je Lasteinleitungspunkt nicht überschreiten darf, so daß die Lastaufnahme durch Überfahren beispielsweise dann besonders kritisch ist, wenn sich im Werksbereich eine Unterkellerung befindet.

Der Erfindung liegt daher die Aufgabe zugrunde, ein gattungsgemäßes fahrerloses Transportfahrzeug in kompakter, gewichtssparender und damit die Energiekosten minimierender Bauweise zu schaffen, das die gestellten Anforderungen ohne die genannten Nachteile erfüllt, insbesondere die Einhaltung der vorgegebenen maximalen Bodenbelastung je Lasteinleitungspunkt sicherstellt.

Diese Aufgabe wird erfindungsgemäß dadurch gelöst, daß die Hydraulikstützen zur Sicherstellung der Kippstabilität des Fahrzeugs zeitgleich mit dem Ausfahren der Last vertikal absenkbar und nach dem Ablegen der Last in ihre Ausgangsposition anhebbar sind. Die Hydrauliksützen sorgen nicht nur für eine ausreichende Kippsicherheit bzw. -stabilität des Fahrzeugs, sondern ermöglichen es darüber hinaus, das Gewicht des Fahrzeugs so leicht wie möglich zu halten und damit den Energieaufwand zu verringern. Denn ein aus sich heraus ein genügendes Gegengewicht bereitstellendes Fahrzeug müßte mit zusätzlicher Masse und/oder entsprechend größer und schwerer gebaut werden, was die Energiebilanz entscheidend beeinträchtigen würde. Zudem wären wohl ergänzende teuere Betonarbeiten am Fahruntergrund bzw. Boden unumgänglich. Die Druckbeaufschlagung der Stützen kann zudem gemäß einer Regelfunktion erfolgen, die das aktuelle Gewicht der Last und die sich stetig verändernde Position des herausfahrenden Lastaufnahmemittels berücksichtigt, um die Achslasten selbst bei völlig herausgefahrenem, d. h. freitragendem Lastaufnahmemittel in solchen Grenzen zu halten, daß der während der Transportfahrt des Fahrzeugs auftretende Maximalwert nicht überschritten wird. Je mehr das Lastaufnahmemittel herausfährt, desto mehr Stützkraft steht aufgrund der Regelung zur Verfügung.

Weitere Einzelheiten und Vorteile der Erfindung ergeben sich aus den Patentansprüchen und der nachfolgenden Beschreibung, in der Ausführungsbeispiele des Gegenstandes der Erfindung näher erläutert sind. Es zeigen:
- Figur 1: in perspektivischer Darstellung die Gesamtansicht eines fahrerlosen Transportfahrzeugs mit einem im Fahrzeugchassis verfahrbar angeordneten Traggerüst für ein heb- und senkbares Lastaufnahmemittel;
- Figur 2: das Transportfahrzeug gemäß Fig. 1 in der Seitenansicht; und
- Figur 3: a) bis i) verschiedene aufeinanderfolgende Arbeitspositionen eines fahrerlosen Transportfahrzeuges beim Ablegen einer aufgenommenen Last.

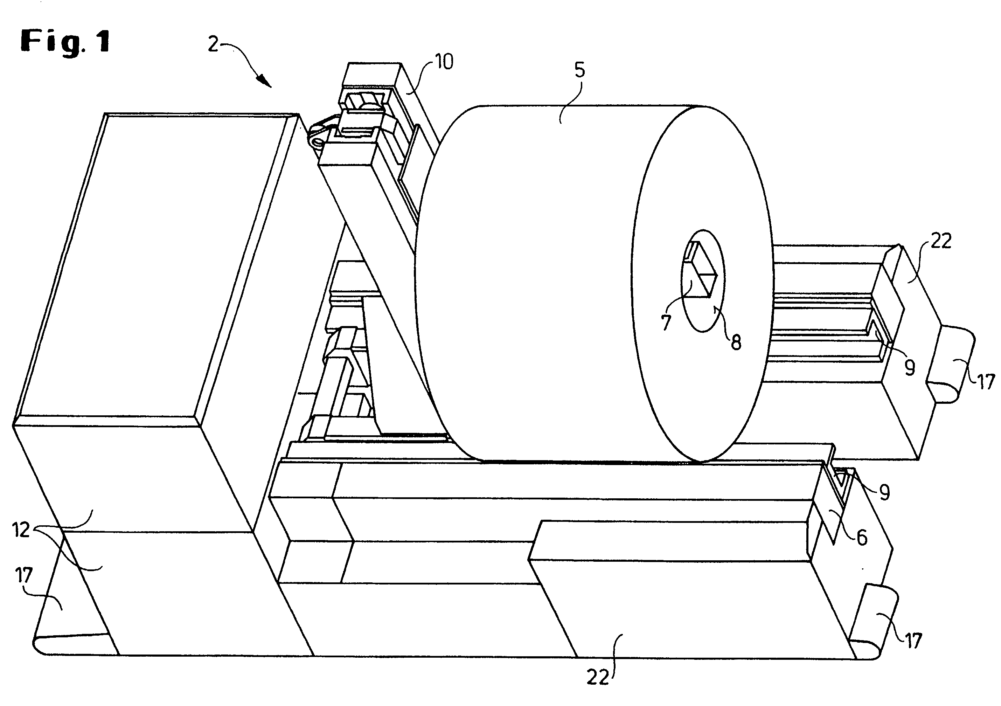

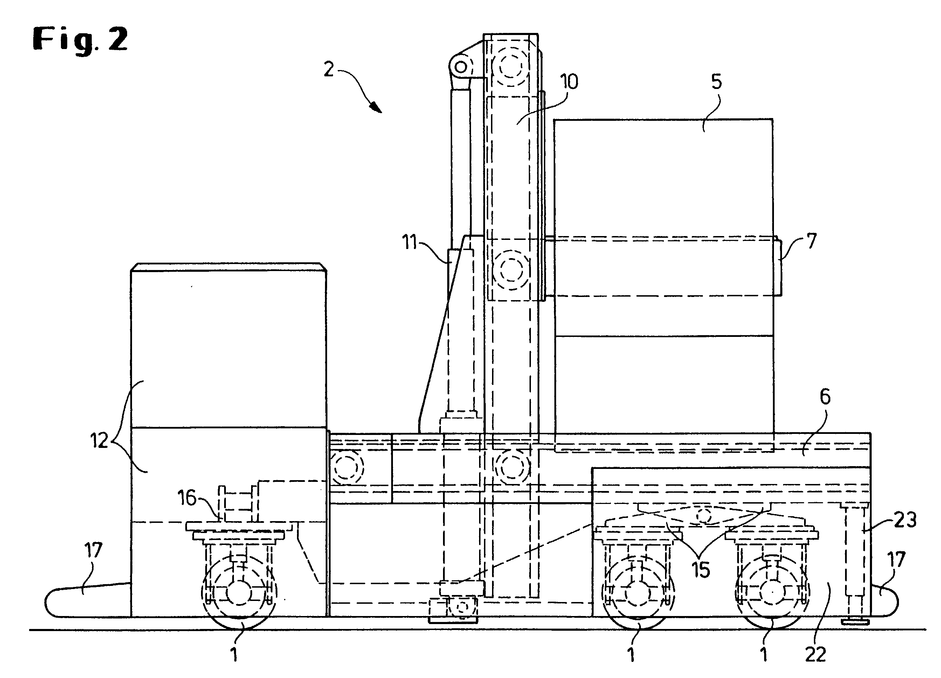

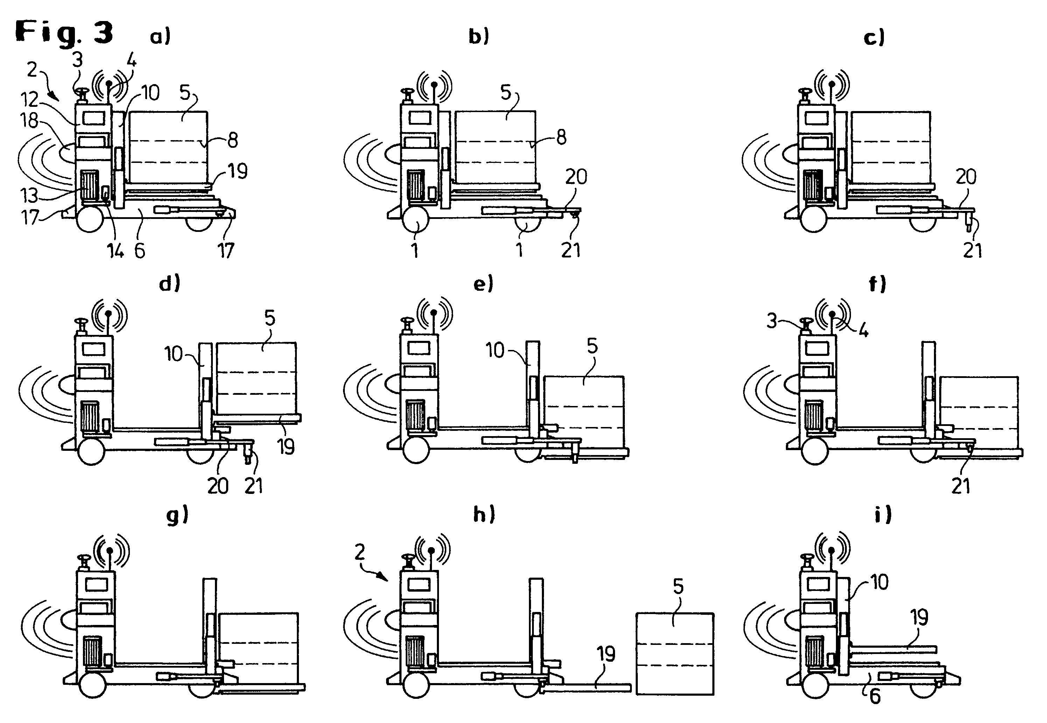

Ein in Figur 1 gezeigtes, auf Rädern 1 (vgl. Figur 2) verfahrbares fahrerloses Transportfahrzeug 2 besitzt zur Navigationssteuerung mit einem übergeordneten Fahrzeugleitrechner kommunizierende Positionsgeber 3 und Sendemittel 4 (vgl. Fig. 3). Zum Handhaben von schweren Lasten, im Ausführungsbeispiel ein Coil 5, ist im Fahrzeugchassis 6 ein mit einem Lastaufnahmemittel 7 in Form eines in das Coilauge 8 eingreifenden Tragdorn ausgerüstetes, in U-förmigen Schienen 9 horizontal verfahrbares Traggerüst 10 angeordnet. Dieses nimmt das mittels eines Hubzylinders 11 (vgl. Figur 2) heb- und senkbare Lastaufnahmemittel 7 auf. Die horizontale Transferbewegung des Traggerüstes 10 kann beispielsweise mit Hilfe eines Zahnstangenantriebes verwirklicht werden.

Das vordere Fahrzeugende weist einen Aufbau 12 auf, der Raum für - nicht dargestellte - Batterien und Schaltschränke sowie den Fahrantrieb 13 und einen Lenkantrieb 14 (vgl. Figur 3) der lenkbaren Räder 1 bietet. Es sind nämlich beide Vorderradsätze, die gemäß Figur 2 auf einem Schwingenträger (Pendelachse) 15 montiert sind, sowie auch der Hinterradträger 16 lenkbar; auf diese Weise lassen sich ein erhöhter Fahrwiderstand und Reifenverschleiß verhindern und der Wendekreis wirksam verkürzen. Sowohl die Lenkgetriebemotoren 14 als auch die Fahrantriebe 13 und die elektrischen Antriebe für die Hubhydraulik werden über Wechselrichter geregelt, womit sich vorteilhaft erreichen läßt, daß neben der Beschleunigung auch die Verzögerung elektromotorisch - mit Netzrückspeisung - erfolgt. Damit läßt sich sicherstellen, daß Verzögerungs- und Beschleunigungsvorgänge mit identischen Parametern ablaufen.

Die Sicherheitsrichtlinien und -vorschriften berücksichtigend, kann das Transportfahrzeug 2 sowohl mit druckempfindlichen Stoßfängern (Bumper) 17 als auch virtuellen Stoßfängern 18 (vgl. Figur 3) versehen werden, die im weiteren Umfeld Hindernisse erfassen, z.B. mittels Ultraschall, Infrarot- oder Lasersensoren. Hierbei bewirken Hindernisse im weiteren Umfeld des Fahrzeuges 2 eine Aktivierung der virtuellen Stoßfänger 18, die zu einer kontrollierten Verzögerung des Fahrzeugs 2 auf ein geringeres Geschwindigkeitsniveau führt, wobei sich die Empfindlichkeit der virtuellen Stoßfänger 18 hinsichtlich Entfernung und sicherheitstechnischer Relevanz justieren läßt. Sollten die mechnischen Stoßfänger 17 mit einem Hindernis in Kontakt kommen, stellt sich sofort eine Notbremsung ein.

Die Betriebsweise beim Ablegen eines von dem Fahrzeug 2 bereits übernommenen Coils 5 wird nachfolgend anhand der in Figur 3 gezeigten verschiedenen Betriebspositionen a) bis i) beschrieben, wobei das Transportfahrzeug 2 abweichend von der Figur 2 das Coil 5 allerdings nicht mit einem Tragdorn, sondern mit einem Lastaufnahmemittel in Form von zwei sich an den Coilumfang anlegenden Gabelzinken 19 aufgenommen hat. Außerdem sind hier horizontal ausfahrbare Stützträger 20 mit an ihren vorderen Enden angebrachten Hydraulikstützen 21 vorgesehen, während hingegen bei dem Fahrzeug nach Figur 2 unmittelbar in den Seitenholmen 22 vertikal heb- und senkbare Stützen 23 angeordnet sind. Beiden integrierten hydraulischen Stütz-Varianten ist gemeinsam, daß sie zeitgleich mit dem Ausfahren der Last, d.h. des Coils 5 vertikal abgesenkt werden und die Kippstabilität sicherstellen. Die Druckbeaufschlagung der Stützträger 20 mit den Hydraulikstützen 21 bzw. der vertikal heb- und senkbaren Stützen 23 kann gemäß einer Regelfunktion erfolgen, die das aktuelle Gewicht der Last und die jeweilige, sich beim Ausfahren verändernde Position des Lastaufnahmemittels (Tragdorn oder Gabelzinken) berücksichtigt, um die Achslasten derart zu begrenzen, daß auch beim Ausfahren des Traggerüstes 10 mit dem von diesem aufgenommenen Coil 5 der während der Transportfahrt, wie gemäß Figur 3a mit voll auf dem Fahrzeugchassis des Fahrzeugs 2 ruhender Last, auftretende Maximalwert nicht überschritten wird.

Sobald das Transportfahrzeug 2 seine Positon zum Abgeben der Last bzw. des Coils 5 erreicht hat, werden die Stützträger 20 horizontal ausgefahren (vgl. Figur 3b), die Hydraulikstützen 21 auf den Boden abgesenkt (vgl. Figur 3c) und verfährt das Traggerüst 10, bis das Coil 5 die gemäß Figur 3d über das Fahrzeug 2 vorkragende Position eingenommen hat. Danach ist es möglich, das Coil 5 - wie in Figur 3e - auf den Boden bzw. in seine Lagerposition abzulegen. Sobald das geschehen ist, werden gemäß den Figuren 3f und 3g zunächst die Hydraulikstützen 21 in ihre Ausgangsposition zurückgestellt und danach die Stützträger 20 mit den Hydraulikstützen 21 in das Fahrzeugchassis eingefahren (vgl. Figur 3g). Wenn sich das Fahrzeug 2 danach von dem abgelegten Coil 5 entfernt (vgl. Figur 3h) hat, liegen die Gabelzinken 19 frei, so daß sie bis über die Ebene des Fahrzeugchassis 6 hinaus angehoben und mittels des Traggerüstes 10 in ihre Ausgangsposition zurückbewegt werden können (vgl. Figur 3i). Das Aufnehmen einer Last bzw. eines Coils 5 geschieht in umgekehrtem Ablauf.

Die Anordnung von vertikal heb- und senkbaren Stützen 23 im Fahrzeugchassis 6 des Transportfahrzeuges 2 gemäß Figur 2 hat gegenüber der horizotal ausfahrbaren Stützanordnung (Stützträger 20 und Hydraulikstützen 21) den Vorteil, daß das Fahrzeug 2 unabhängig von der Breite einer das Coil 5 aufnehmenden Ablage ist; bei der Ausführung nach Figur 3 ist die Breite einer solchen Coil-Auflage auf die lichte Weite zwischen den beiden horizontal ausfahrbaren Stützträgern 20 begrenzt.

## Patentansprüche

1. Fahrerloses, frei navigierendes Transportfahrzeug (2) zum Handhaben von Lasten, insbesondere zum Transport von Bunden, wie zu Coils (5) gewickelten metallischen Bändern, schweren Papierrollen oder dergleichen, mit einem heb- und senkbaren Lastaufnahmemittel (7), das auf einem im Fahrzeugchassis horizontal verfahrbaren, in seiner ausgeschobenen Endposition von Hydraulikstützen (21, 23) abgestützten Traggerüst (10) angeordnet ist und beim Aufnehmen oder Ablegen der Last von dem Traggerüst in eine über das Fahrzeugchassis (6) hinaus vorkragende Position verfahrbar ist,
**dadurch gekennzeichnet,**
**daß** die Hydraulikstützen (21, 23) zur Sicherstellung der Kippstabilität des Fahrzeugs (2) zeitgleich mit dem Ausfahren der Last (5) vertikal senkbar und nach dem Ablegen der Last in ihre Ausgangsposition anhebbar sind.

2. Fahrerloses Transportfahrzeug nach Anspruch 1,
**dadurch gekennzeichnet,**
**daß** in den Seitenholmen (22) des Fahrzeugchassis (6) angeordnete Stützen (23) z.B. kraftgeregelt vertikal heb- und senkbar sind.

3. Fahrerloses Transportfahrzeug nach Anspruch 1,
**dadurch gekennzeichnet,**
**daß** in den Seitenholmen (22) des Fahrzeigchassis (6) angeordnete Stützen (Stützträger 20, Hydraulikstützen 21) horizontal ein- und ausfahrbar sind.

## Claims

1. A driverless, freely navigating transport vehicle (2) for handling loads, especially for the transport of annuli, such as metallic strips wound into coils (5), heavy paper rolls or similar, with a means for bearing pressure (7) that can be raised or lowered and is arranged on a framework (10) which is horizontally displaceable in the vehicle chassis and which in its extended end position is supported by hydraulic supports (21, 23), and which can be moved into a position protruding over the vehicle chassis (6) when the load is being placed on or removed from the framework,
**characterised in that**
to ensure the tilting stability of the vehicle (2) the hydraulic supports (21, 23) are capable of being vertically lowered simultaneously with the extension of the load (5) and of being raised back to their starting position after the load has been deposited.

2. The driverless transport vehicle as cited in claim 1,
**characterised in that**
supports (23) arranged in the side columns (22) of the vehicle chassis (6) are capable of being raised and lowered in a force-controlled manner for example.

3. The driverless transport vehicle as cited in claim 1,
**characterised in that**
supports (support strut 20, hydraulic support 21) arranged in the side columns (22) of the vehicle chassis (6) are horizontally extensible and retractable.

## Revendications

1. Véhicule de transport (2) sans conducteur, à navigation libre, pour la manoeuvre de charges, notamment pour le transport de paquets, comme des bandes métalliques rassemblées en feuillards (5), des rouleaux de papiers lourds ou similaires, avec un moyen de préhension des charges (7) relevable et abaissable, qui est disposé sur une armature porteuse (10) déplaçable à l'horizontale dans le châssis du véhicule, supporté par des supports hydrauliques (21, 23) dans sa position finale sortie et qui lors de la prise ou de la dépose de la charge peut être déplacé par l'armature porteuse dans une position dépassant le châssis du véhicule (6),
**caractérisé en ce que**
pour garantir la stabilité au renversement du véhicule, les supports hydrauliques (21, 23) peuvent être abaissés à la verticale simultanément à la sortie de la charge (5) et relevés dans leur position initiale, lorsque la charge a été déposée.

2. Véhicule de transport sans conducteur selon la revendication 1,
**caractérisé en ce que**
des supports (23) disposés dans les longerons latéraux (22) du châssis du véhicule (6) peuvent être relevés et abaissés à la verticale, par exemple par réglage énergétique.

3. Véhicule sans conducteur selon la revendication 1,
**caractérisé en ce que**
des supports (supports porteurs 20, supports hydrauliques 21) disposés dans les longerons latéraux (22) du châssis du véhicule (6) peuvent être rentrés et sortis à l'horizontale.
